# EUROPEAN PATENT SPECIFICATION

(11) **EP 3 832 097 B1**
(45) Date of publication and mention of the grant of the patent: **01.11.2023**
(21) Application number: 20206667.6
(22) Date of filing: 10.11.2020
(51) Int. Cl.: F02C 7/32, F01D 15/10, H02J 1/10

(54) **GAS TURBINE ENGINE**
GASTURBINENTRIEBWERK
MOTEUR À TURBINE À GAZ

(30) Priority: 06.12.2019 GB 201917911
(43) Date of publication of application: 09.06.2021
(73) Proprietor: Rolls-Royce plc, London N1 9FX (GB)
(72) Inventor: Brookes, David, Derby, Derbyshire DE24 8BJ (GB)
(74) Representative: Rolls-Royce plc

(56) References cited:
- EP-A1- 3 123 016
- WO-A1-2014/143218
- US-A1- 2015 123 463
- US-A1- 2016 109 133

## Description

### TECHNICAL FIELD

This disclosure relates to gas turbine engines.

### BACKGROUND

In aerospace, more electric engine (MEE) and more electric aircraft (MEA) concepts are increasingly being adopted due to the reductions in both fuel consumption and complexity that they facilitate. For example, one known aircraft's engines include electric machines operable as both motors and generators to facilitate both generation of electrical power during flight and starting of the engine. This permits removal of the airturbine starter. One engine configuration for this known aircraft includes such electric machines coupled to the high-pressure spool of a twin-spool turbofan. Another includes such electric machines coupled to the intermediate-pressure spool of a triple-spool turbofan.

Analysis has shown that further reduction in fuel consumption may be achieved by generating electrical power using the low-pressure spool rather than using the high-pressure spool. Further, it has also been shown that transfer of power from the low- and high-pressure spools may improve fuel efficiency at a number of phases in the operational envelope. In an example, approximately 1 megawatt of electrical power may be produced from the low-pressure shaft, with 400 kilowatts being transferred to the high-pressure spool and the remainder supplied to the airframe.

It is also contemplated that future airframe designs may incorporate fuselage boundary layer ingestion systems to reduce wake drag and thus reduce fuel consumption. Most practical proposals are based on tube-and-wing twinjets, in which the underwing turbofan engines also operate as turboelectric generators for supplying power to a boundary layer ingestion fan at the tail of the aircraft. Such aft-mounted fans may command in excess of 2 megawatts to operate effectively. Thus, each turbofan engine may be required to produce a further megawatt of electrical power for the airframe.

In such scenarios, therefore, medium voltage (as defined by IEC 60038:2009, i.e. 1 kilovolt ac or greater) electrical systems will be required to maintain acceptable current ratings, as too high a current has a detrimental effect in terms of Joule losses and conductor weight. However, it is desirable to reduce the number of systems operating at medium voltage due to the risk of arcing and corona at altitude, thus it is prudent to retain lower voltage ratings for the lower powered systems.

Thus, it is an object of the invention to provide an electrical system for a gas turbine engine that facilitates transfer of power from one electrical network to another operating at a different voltage.

International Patent Application Publication WO 2014/143218 A1 relates to a gas turbine engine and electrical system comprising electrical buses. The gas turbine engine comprises first and second electrical machines in mechanical communication with low- and high- pressure spools, first and second electrical buses connected with the first and second electrical machines via converters and an energy storage system. Controllers control an amount of electrical power supplied from the energy storage system to at least one of the buses.

United States Patent Application Publication US 2015/0123463 A1 relates to an electrical power system for an aircraft. The electrical power system includes a first electrical machine driven by a first pressure spool and outputting a first voltage, a second electrical machine driven by a second pressure spool and outputting a second voltage, and an electrical distribution bus receiving the first and second voltages and supplying the voltages to loads.

United States Patent Application Publication US 2016/0109133 A1 relates to a gas turbine engine fuel system. The fuel system includes first and second variable flow pumps, and first and second variable speed electric motors configured to drive the first and second fuel pumps. Each of the electric motors includes a polyphase motor including a stator having concentrated windings.

### SUMMARY

In an aspect, there is provided a gas turbine engine having a spool, further comprising:
a first rotary electric machine mechanically coupled with the spool and having connected therewith a first power converter to interface the electric machine with a first dc network operating at a first voltage;
a second rotary electric machine mechanically coupled with the same spool as the first rotary electric machine and having connected therewith a second power converter to interface the electric machine with a second dc network operating at a second voltage greater than said first voltage;
wherein the first electric machine and the second electric machine are operable as a motor-generator set for transfer of electrical power to the first dc network from the second dc network via the spool.

In an embodiment, the first electric machine has a lower power rating than the second electric machine.

In an embodiment, the first power converter is a unidirectional rectifier. In an embodiment, the second power converter is a unidirectional inverter.

In an embodiment, the first power converter and the second power converter are bidirectional converters, whereby the first electric machine and the second electric machine are operable as a motor-generator set for transfer of electrical power between the first dc network to the second dc network.

In an embodiment, the spool is a low-pressure spool, and the gas turbine engine further comprises a high-pressure spool.

In an embodiment, the gas turbine engine further comprises a third rotary electric machine mechanically coupled with the high-pressure spool and having connected therewith a third power converter to interface the third electric machine with the first dc network.

In an embodiment, the third power converter is a unidirectional inverter.

In an embodiment, the third power converter is a bidirectional converter.

In an embodiment, the electric machines comprise permanent magnet rotors.

In an embodiment, the first electric machine and the second electric machine are configured as a dynamotor.

In an embodiment, the second dc network includes an engine electronic controller.

In an embodiment, the first dc network includes one or more electrical accessory drives connected with respective engine accessories.

In an embodiment, the engine accessories are one or more engine accessories selected from:
a fuel pump;
an oil pump;
a hydraulic pump;
a cabin blower.

In an embodiment, the second dc network includes an energy storage device, whereby the motor-generator set is operable to supply power to the first dc network from the energy storage device.

In another aspect, there is provided a method comprising transferring electrical power to a first dc network operating at a first voltage from a second dc network operating at a second voltage greater than the first voltage, the method further comprising:
providing a gas turbine engine of the aforesaid type;
providing electrical power at the second voltage to the second power converter from the second dc network;
causing rotation of the second electric machine by the second power converter and the first electric machine thereby;
generating electrical power by the first electric machine;
providing electrical power to the first dc network at the first voltage by the first power converter.

### BRIEF DESCRIPTION OF THE DRAWINGS

Embodiments will now be described by way of example only with reference to the accompanying drawings, which are purely schematic and not to scale, and in which:
Figure 1 shows a general arrangement of an engine for an aircraft;
Figure 2 shows an electrical system for the engine of Figure 1;
Figure 3 shows a first embodiment of a motor-generator set for the engine of Figure 1; and

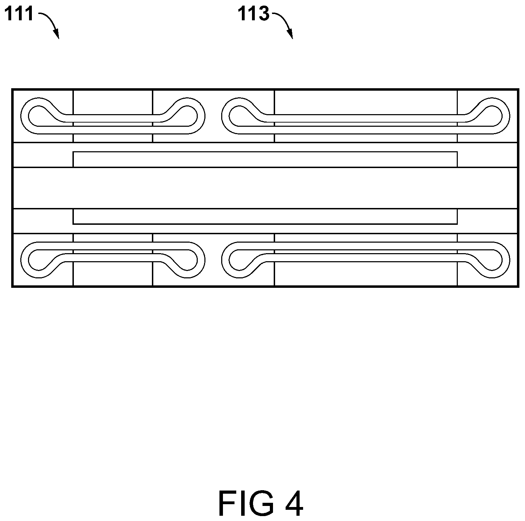

Figure 4 shows a second embodiment of a motor-generator set for the engine of Figure 1.

### DETAILED DESCRIPTION

### Figure 1

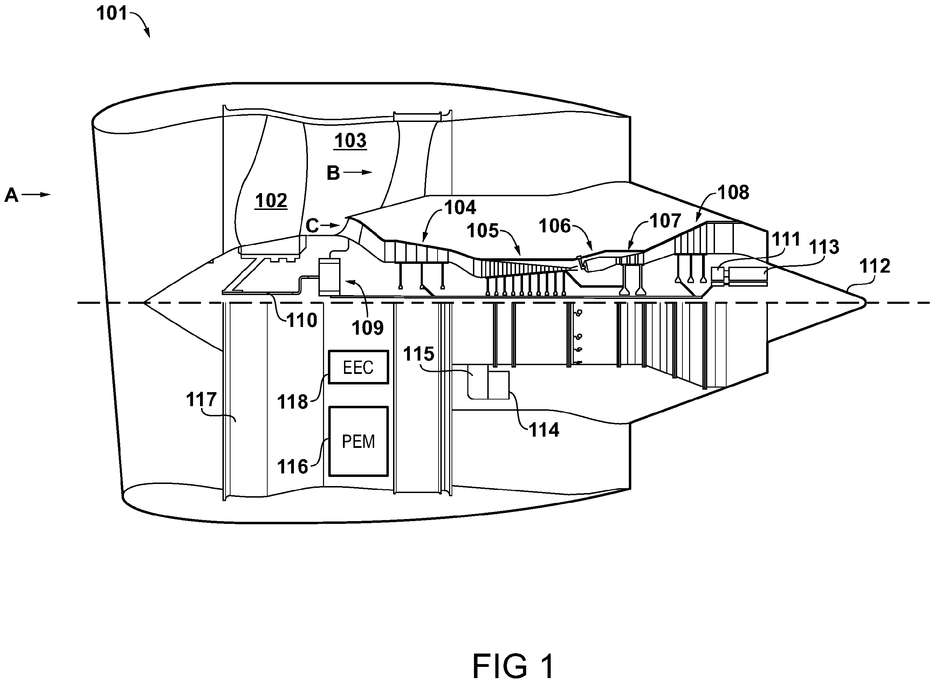

A general arrangement of an engine 101 for an aircraft is shown in Figure 1. In the present embodiment, the engine 101 is of turbofan configuration, and thus comprises a ducted fan 102 that receives intake air A and generates two pressurised airflows: a bypass flow B which passes axially through a bypass duct 103 and a core flow C which enters a core gas turbine. It will be appreciated by those skilled in the art that the principles of the present invention may be applied to other engine configurations, such as aft-fan, prop-fan, counter-rotating ducted fan, etc. or even to non-aircraft engines such as land- or sea-based gas turbine engines.

Referring again to the Figure, the core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art.

In the present embodiment, the fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn are meshed with a static ring gear. The rotating carrier drives the fan 102 via a fan shaft 110.

It will be appreciated that in alternative embodiments a star-configuration epicyclic gearbox (in which the planet carrier is static, and the ring gear rotates and provides the output) may be used instead. In other alternative embodiments, the fan 102 may be driven directly by the low-pressure turbine 108, thus forming part of the low-pressure spool. Further alternative arrangements may involve provision of a further turbine specifically for driving the fan, known as a three-shaft or triple-spool configuration.

In the present embodiment, a first rotary electric machine 111 is mechanically coupled with the low-pressure spool. In the present embodiment, the first electric machine 111 is mounted in the tail cone 112 of the engine 101 coaxially with the turbomachinery and is coupled to the low-pressure turbine 108. In alternative embodiments, the first electric machine 111 may be located axially in line with low-pressure compressor 104, which may adopt a bladed disc or bladed drum configuration to provide space for the first rotary electric machine 111. ac

As set out in the introduction, higher levels of electrical power may be required for certain features on advanced aircraft, such as electrically-powered propulsors. To this end, the engine 101 further comprises a second rotary electric machine 113 which is also mechanically coupled to the low-pressure turbine 108. In the present embodiment, the second electric machine 113 is mounted in the tail cone 112 of the engine 101 coaxially with the turbomachinery and the first electric machine 111. ac

In the present embodiment, an additional, third rotary electric machine 114 is coupled with the high-pressure spool. In the present embodiment, the third electric machine 114 is coupled to the high-pressure spool via a high-pressure spool driven, core-mounted accessory gearbox 115 of conventional drive configuration.

It will of course be appreciated by those skilled in the art that any other suitable location for the first, second and third electric machines may be adopted.

For example, in alternative embodiments, the third electric machine 114 may be mounted coaxially with the turbomachinery in the engine 101. The third electric machine 114 may be mounted axially in line with the duct between the low- and high-pressure compressors 104 and 105, or between the low-pressure compressor 104 and the gearbox 109. In alternative embodiments, the first electric machine 111 may be mounted axially in line with the duct between the low- and high-pressure compressors 104 and 105.

In the present embodiment, each of the electric machines 111, 113 and 114 are connected with a power electronics module (PEM) 116. In the present embodiment, the PEM 116 is mounted on the fan case 117 of the engine 101, but it will be appreciated that it may be mounted elsewhere such as on the core gas turbine, or in the vehicle to which the engine 101 is attached, for example. Further, different parts of the PEM 116 may be distributed between different locations. For example, some components may be mounted on the engine 101 and some may be mounted in the in the vehicle to which the engine 101 is attached.

Control of the PEM 116 and thus of the first, second and third electric machines 111, 112 and 113 is in the present example performed by an electronic engine controller (EEC) 118. In the present embodiment the EEC 118 is a full-authority digital engine controller (FADEC), the configuration of which will be known and understood by those skilled in the art. It therefore controls all aspects of the engine 101, i.e. both of the core gas turbine and the first, second and third electric machines 111, 112 and 113. In this way, the EEC 118 may holistically respond to both thrust demand and electrical power demand.

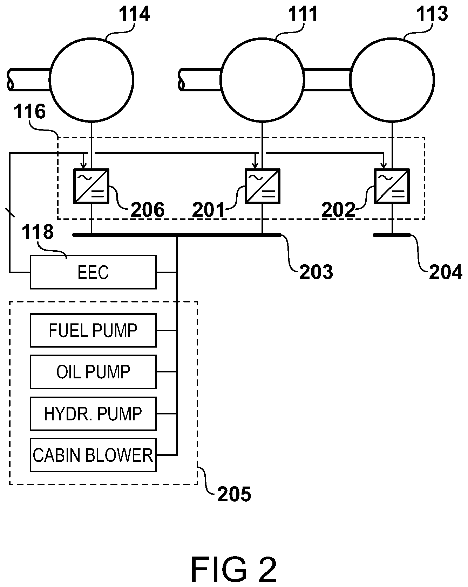

Operation of the PEM 116 by the EEC 118 will be described further with reference to Figure 2.

Various embodiments of the engine 101 may include one or more of the following features.

It will be appreciated that instead of being a turbofan having a ducted fan arrangement, the engine 101 may instead be a turboprop comprising a propeller for producing thrust.

The low- and high-pressure compressors 104 and 105 may comprise any number of stages, for example multiple stages. Each stage may comprise a row of rotor blades and a row of stator vanes, which may be variable stator vanes (in that their angle of incidence may be variable). In addition to, or in place of, axial stages, the low-or high-pressure compressors 104 and 105 may comprise centrifugal compression stages.

The low- and high-pressure turbines 107 and 108 may also comprise any number of stages.

The fan 102 may have any desired number of fan blades, for example 16, 18, 20, or 22 fan blades.

Each fan blade may be defined as having a radial span extending from a root (or hub) at a radially inner gas-washed location, or 0 percent span position, to a tip at a 100 percent span position. The ratio of the radius of the fan blade at the hub to the radius of the fan blade at the tip - the hub-tip ratio - may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The hub-tip ratio may be in an inclusive range bounded by any two of the aforesaid values (i.e. the values may form upper or lower bounds). The hub-tip ratio may both be measured at the leading edge (or axially forwardmost) part of the blade. The hub-tip ratio refers, of course, to the gas-washed portion of the fan blade, i.e. the portion radially outside any platform.

The radius of the fan 102 may be measured between the engine centreline and the tip of a fan blade at its leading edge. The fan diameter may be greater than (or on the order of) any of: 2.5 metres, 2.6 metres, 2.7 metres, 2.8 metres, 2.9 metres, 3 metres, 3.1 metres, 3.2 metres, 3.3 metres, 3.4 metres, 3.5 metres, 3.6 metres, 3.7 metres, 3.8 metres or 3.9 metres. The fan diameter may be in an inclusive range bounded by any two of the aforesaid values (i.e. the values may form upper or lower bounds).

The rotational speed of the fan 102 may vary in use. Generally, the rotational speed is lower for fans with a higher diameter. Purely by way of non-limitative example, the rotational speed of the fan at cruise conditions may be less than 2500 rpm, for example 2300 rpm. Purely by way of further non-limitative example, the rotational speed of the fan 102 at cruise conditions for an engine having a fan diameter in the range of from 2.5 metres to 3 metres (for example 2.5 metres to 2.8 metres) may be in the range of from 1700 rpm to 2500 rpm, for example in the range of from 1800 rpm to 2300 rpm, or, for example in the range of from 1900 rpm to 2100 rpm. Purely by way of further non-limitative example, the rotational speed of the fan at cruise conditions for an engine having a fan diameter in the range of from 3.2 metres to 3.8 metres may be in the range of from 1200 rpm to 2000 rpm, for example in the range of from 1300 rpm to 1800 rpm, for example in the range of from 1400 rpm to 1600 rpm.

In use of the engine 101, the fan 102 (with its associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the one-dimensional average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4. The fan tip loading may be in an inclusive range bounded by any two of the values in the previous sentence (i.e. the values may form upper or lower bounds).

The engine 101 may have any desired bypass ratio, where the bypass ratio is defined as the ratio of the mass flow rate of the flow B through the bypass duct to the mass flow rate of the flow C through the core at cruise conditions. Depending upon the selected configuration, the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the aforesaid values (i.e. the values may form upper or lower bounds). The bypass duct may be substantially annular. The bypass duct may be radially outside the core engine 103. The radially outer surface of the bypass duct may be defined by a nacelle and/or a fan case.

The overall pressure ratio of the engine 101 may be defined as the ratio of the stagnation pressure upstream of the fan 102 to the stagnation pressure at the exit of the high-pressure compressor 105 (before entry into the combustor). By way of non-limitative example, the overall pressure ratio of the engine 101 at cruise may be greater than (or on the order of) any of the following: 35, 40, 45, 50, 55, 60, 65, 70, 75. The overall pressure ratio may be in an inclusive range bounded by any two of the aforesaid values (i.e. the values may form upper or lower bounds).

Specific thrust of the engine 101 may be defined as the net thrust of the engine divided by the total mass flow through the engine 101. At cruise conditions, the specific thrust of the engine 101 may be less than (or on the order of) any of the following: 110 Nkg⁻¹s, 105 Nkg⁻¹s 100 Nkg-¹s, 95 Nkg⁻¹s, 90 Nkg⁻¹s, 85 Nkg⁻¹s, or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

The engine 101 may have any desired maximum thrust. For example, the engine 101 may be capable of producing a maximum thrust of at least (or on the order of) any of the following: 160 kilonewtons, 170 kilonewtons, 180 kilonewtons, 190 kilonewtons, 200 kilonewtons, 250 kilonewtons, 300 kilonewtons, 350 kilonewtons, 400 kilonewtons, 450 kilonewtons, 500 kilonewtons, or 550 kilonewtons. The maximum thrust may be in an inclusive range bounded by any two of the aforesaid values (i.e. the values may form upper or lower bounds). The thrust referred to above may be the maximum net thrust at standard atmospheric conditions at sea level plus 15 degrees Celsius (ambient pressure 101.3 kilopascals, temperature 30 degrees Celsius), with the engine 101 being static.

In use, the temperature of the flow at the entry to the high-pressure turbine 107 may be particularly high. This temperature, which may be referred to as turbine entry temperature or TET, may be measured at the exit to the combustor 106, for example immediately upstream of the first turbine vane, which itself may be referred to as a nozzle guide vane. At cruise, the TET may be at least (or on the order of) any of the following: 1400 kelvin, 1450 kelvin, 1500 kelvin, 1550 kelvin, 1600 kelvin or 1650 kelvin. The TET at cruise may be in an inclusive range bounded by any two of the aforesaid values (i.e. the values may form upper or lower bounds). The maximum TET in use of the engine 101 may be, for example, at least (or on the order of) any of the following: 1700 kelvin, 1750 kelvin, 1800 kelvin, 1850 kelvin, 1900 kelvin, 1950 kelvin or 2000 kelvin. The maximum TET may be in an inclusive range bounded by any two of the aforesaid values (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium-based metal or an aluminium based material (such as an aluminium-lithium alloy) or a steel-based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium-based body with a titanium leading edge.

The fan 102 may comprise a central hub portion, from which the fan blades may extend, for example in a radial direction. The fan blades may be attached to the central portion in any desired manner. For example, each fan blade may comprise a fixture which may engage a corresponding slot in the hub. Purely by way of example, such a fixture may be in the form of a dovetail that may slot into and/or engage a corresponding slot in the hub/disc in order to fix the fan blade to the hub. By way of further example, the fan blades maybe formed integrally with a central hub portion. Such an arrangement may be a bladed disc or a bladed ring. Any suitable method may be used to manufacture such a bladed disc or bladed ring. For example, at least a part of the fan blades may be machined from a billet and/or at least part of the fan blades may be attached to the hub/disc by welding, such as linear friction welding.

The engine 101 may be provided with a variable area nozzle (VAN). Such a variable area nozzle may allow the exit area of the bypass duct to be varied in use. The general principles of the present disclosure may apply to engines with or without a VAN.

As used herein, cruise conditions have the conventional meaning and would be readily understood by those skilled in the art.

Such cruise conditions may be conventionally defined as the conditions at mid-cruise, for example the conditions experienced by the aircraft and/or engine at the midpoint (in terms of time and/or distance) between top of climb and start of descent. Cruise conditions thus define an operating point of the gas turbine engine which provides a thrust that would ensure steady state operation (i.e. maintaining a constant altitude and constant Mach number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach number are known, and thus the operating point of the engine at cruise conditions is clearly defined.

The cruise conditions may correspond to ISA standard atmospheric conditions at an altitude that is in the range of from 10000 to 15000 metres, such as from 10000 to 12000 metres, or from 10400 to 11600 metres (around 38000 feet), or from 10500 to 11500 metres, or from 10600 to 11400 metres, or from 10700 metres (around 35000 feet) to 11300 metres, or from 10800 to 11200 metres, or from 10900 to 11100 metres, or 11000 metres. The cruise conditions may correspond to standard atmospheric conditions at any given altitude in these ranges.

The forward speed at the cruise condition may be any point in the range of from Mach 0.7 to 0.9, for example one of Mach 0.75 to 0.85, Mach 0.76 to 0.84, Mach 0.77 to 0.83, Mach 0.78 to 0.82, Mach 0.79 to 0.81, Mach 0.8, Mach 0.85, or in the range of from Mach 0.8 to 0.85. Any single speed within these ranges may be the cruise condition. For some aircraft, the cruise conditions may be outside these ranges, for example below Mach 0.7 or above Mach 0.9.

Thus, for example, the cruise conditions may correspond specifically to a pressure of 23 kilopascals, a temperature of minus 55 degrees Celsius, and a forward Mach number of 0.8.

It will of course be appreciated, however, that the principles of the invention claimed herein may still be applied to engines having suitable design features falling outside of the aforesaid parameter ranges.

### Figure 2

An electrical system 201 for connecting the first electric machine 111 and the second electric machine 113 on the low-pressure spool is shown in Figure 2. In this embodiment, the electrical system 201 also connects with the third electric machine 114 on the high-pressure spool.

The electrical system 201 is shown in the form of a single line diagram, the conventions of which will be familiar to those skilled in the art. Thus for alternating current (ac) a single line replaces a plurality of polyphase lines, and for direct current (dc) a single line replaces the +V and -V lines.

The PEM 116 comprises a first power converter 201 having an ac side connected with the first electric machine 111, and a second power converter 202 having an ac side connected with the second electric machine 113.

A dc side of the first power converter 201 is connected with a first dc network 203 operating at a first dc voltage. In an embodiment the first dc voltage is up to 1 kilovolt. In an embodiment, the first dc voltage is up to ±500 volts. In an embodiment, the first dc voltage is 540 volts. In an embodiment, the first dc voltage is ±270 volts.

A dc side of the second power converter 202 is connected with a second dc network 204 operating at a second dc voltage. The second dc voltage is greater than the first dc voltage. In an embodiment the second dc voltage is 1 kilovolt or greater. In an embodiment, the second dc voltage is 3 kilovolts. In an embodiment, the first dc voltage is ±1.5 kilovolts.

In an embodiment, the first electric machine 111 and the second electric machine 113 are both permanent-magnet rotor electric machines. Alternatively, one or both of the first electric machine 111 and the second electric machine 113 could instead be a different electric machine type, such as induction, wound-field, switched-reluctance, etc.

In an embodiment, the first electric machine 111 is configured with a lower rated power than the second electric machine 113. For example, in an embodiment the first electric machine 111 is configured with a rated power of 500 kilowatts, and the second electric machine 113 is configured with a rated power of 2 megawatts.

In operation, the first electric machine 111 and the second electric machine 113 are configured to cooperate to transfer power from the second dc network 204 to the first dc network 203. This is achieved by operating the first electric machine 111 and the second electric machine 113 as a motor-generator set. Thus, the second electric machine 113 is operated as a motor, and the first electric machine 111 is operated as a generator. In this way, electrical power available on the second dc bus 204, for example from another generator or a battery or any other source of electrical power, may be transferred to the first dc network 203.

Configuring the first electric machine 111 and the second electric machine 113 to operate in this way provides a number of benefits compared with use of a dc-dc converter between the dc networks 202 and 203.

In particular, it allows electrical power sources on the second dc network 204 to be used to power devices on the first dc network 203. For example, in an embodiment, the EEC 118 is powered via the first dc network 203, and thus can be initialised using a power source such as a battery on the second dc network 204 prior to engine start. Other engine accessories 205 driven by electrical accessory drives may also be powered in this way, such as for example, a fuel pump, an oil pump, a hydraulic pump, and/or a cabin blower.

Further, the configuration of the electric machines as a motor-generator set provides harmonic cancellation, frequency conversion, and line isolation. This allows different power quality standards to be adopted on the two dc networks 202 and 203. The combination of the electric machines also provides resistance to electrostatic discharge. Further, the motor-generator set formed by the electric machines 111 and 113 can handle large short-term overloads far better than semiconductor devices of the same average load rating due to the much larger mass of the thermally-limited components (windings and stator, compared with solid-state switches and heatsinks).

In an embodiment, the first power converter 201 is a unidirectional rectifier and the second power converter 202 is a unidirectional inverter. Thus the first power converter 201 is configured to convert ac generated by the first electric machine 111 to dc for the first dc network 203, and the second power converter 202 is configured to convert ac generated by the second electric machine 113 to dc for the second dc network 204.

In a different embodiment, the first power converter 201 and the second power converter 202 are bidirectional converters capable of converting from ac to dc and vice versa. In this way, electrical power from the first dc network 202 may also be transferred to the second dc network 202 by operating the first electric machine 111 as a motor and the second electric machine 113 as a generator.

In an embodiment, the third electric machine 114 is connected with an ac side of a third power converter 206. A dc side of the third power converter 206 is connected with the first dc network 202.

In a specific embodiment, the third power converter 206 is a unidirectional inverter. Thus, in operation, engine start may be achieved by driving the second electric machine 113 as a motor using electrical power from a source thereof on the second dc network 204, generating electrical power for the first dc network 203 by the first electric machine 111 acting as a generator, and driving the high-pressure spool by the third electric machine 114 acting as a motor using electrical power from the first dc network 203.

In another embodiment, the third power converter 206 is a bidirectional power converter. Thus, in operation, power may be generated by the third electric machine 114 and transferred to the second dc network 204 via the first and second electric machines 111 and 113 operating as a motor-generator set.

Providing bidirectional electrical power transfer between the spools in the engine 101 allows the turbomachinery to be designed to exploit the attendant advantages conferred by power transfer. For example, transfer of power from the low-pressure spool to the high-pressure spool during the approach phase of an aircraft's mission reduces the effective thrust of the engine 101 whilst maintaining sufficient high-pressure spool rotational speed to safely initiate a go-around manoeuvre. Further, in engine 101, transfer of power from the high-pressure spool to the low-pressure spool during a deceleration manoeuvre reduces the risk of weak extinction, therefore enabling a more optimal combustor design.

### Figure 3

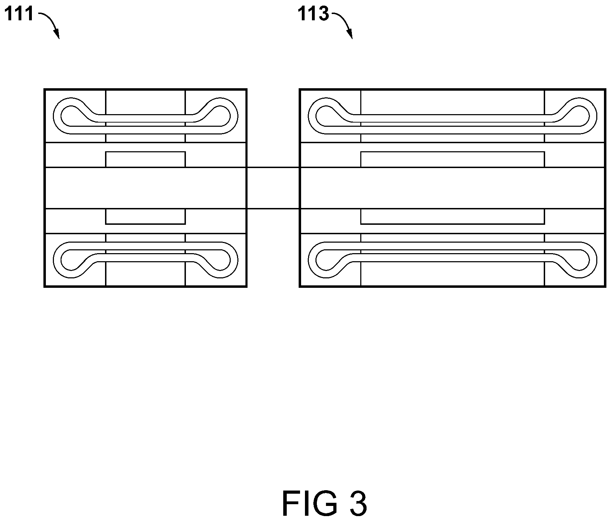

One possible arrangement of the first electric machine 111 and the second electric machine 113 is shown in Figure 3. In this embodiment, the two electric machines are separate electric machines connected by a shaft.

### Figure 4

Another possible arrangement of the first electric machine 111 and the second electric machine 113 is shown in Figure 3. In this embodiment, the two electric machines form a dynamotor, having their own winding sets but a shared rotor.

## Claims

1. A gas turbine engine (101) having a spool, further comprising:
a first rotary electric machine (111) mechanically coupled with the spool and having connected therewith a first power converter (201) to interface the electric machine with a first dc network (203) operating at a first voltage;
a second rotary electric machine (113) having connected therewith a second power converter (202) to interface the electric machine with a second dc network (204);
**characterized in that:**
the second electric machine (113) is mechanically coupled with the same spool as the first electric machine;
the second dc network (204) operates at a second voltage greater than said first voltage; and
the first electric machine (111) and the second electric machine (113) are operable as a motor-generator set for transfer of electrical power to the first dc network (203) from the second dc network (204) via the spool.

2. The gas turbine engine (101) of claim 1, in which the first electric machine (111) has a lower power rating than the second electric machine (113).

3. The gas turbine engine (101) of claim 1 or claim 2, in which:
the first power converter (201) is a unidirectional rectifier;
the second power converter (202) is a unidirectional inverter.

4. The gas turbine engine (101) of claim 1 or claim 2, in which the first power converter (201) and the second power converter (202) are bidirectional converters, whereby the first electric machine (111) and the second electric machine (113) are operable as a motor-generator set for transfer of electrical power between the first dc network (203) and the second dc network (204).

5. The gas turbine engine (101) of any preceding claim, in which the spool is a low-pressure spool, and the gas turbine engine further comprises a high-pressure spool.

6. The gas turbine engine (101) of claim 5, further comprising a third rotary electric machine (114) mechanically coupled with the high-pressure spool and having connected therewith a third power converter (206) to interface the third electric machine (114) with the first dc network (203).

7. The gas turbine engine (101) of claim 6, in which the third power converter (206) is a unidirectional inverter.

8. The gas turbine engine (101) of claim 6, in which the third power converter (206) is a bidirectional converter.

9. The gas turbine engine of any preceding claim, in which the electric machines (111, 113, 114) comprise permanent magnet rotors.

10. The gas turbine engine (101) of any preceding claim, in which the first electric machine (111) and the second electric machine (113) are configured as a dynamotor.

11. The gas turbine engine (101) of any preceding claim, in which the first dc network (203) includes an engine electronic controller (118).

12. The gas turbine engine (101) of any preceding claim, in which the first dc network (203) includes one or more electrical accessory drives connected with respective engine accessories (205).

13. The gas turbine engine (101) of claim 12, in which the engine accessories (205) are one or more engine accessories selected from:
a fuel pump;
an oil pump;
a hydraulic pump;
a cabin blower.

14. The gas turbine engine (101) of any preceding claim, in which the second dc network (204) includes an energy storage device, whereby the motor-generator set is operable to supply power to the first dc network (203) from the energy storage device.

15. A method comprising transferring electrical power to a first dc network (203) operating at a first voltage from a second dc network (204) operating at a second voltage greater than the first voltage, the method further comprising:
providing a gas turbine engine (101) according to any one of claims 1 to 14;
providing electrical power at the second voltage to the second power converter (202) from the second dc network (204);
causing rotation of the second electric machine (113) by the second power converter (202) and the first electric machine thereby (111);
generating electrical power by the first electric machine (111);
providing electrical power to the first dc network (203) at the first voltage by the first power converter (201).

## Patentansprüche

1. Gasturbinentriebwerk (101) mit einer Welle, das ferner aufweist:
eine erste rotierende elektrische Maschine (111), die mechanisch mit der Welle verbunden ist und
einen damit verbundenen ersten Stromwandler (201) hat, um die elektrische Maschine mit einem ersten DC-Netzwerk (203) zu koppeln, das mit einer ersten Spannung arbeitet;
eine zweite rotierende elektrische Maschine (113), mit der ein zweiter Stromwandler (202) verbunden ist, um die elektrische Maschine mit einem zweiten DC-Netzwerk (204) zu koppeln;
**dadurch gekennzeichnet, dass**
die zweite elektrische Maschine (113) mechanisch mit derselben Welle wie die erste elektrische Maschine verbunden ist;
das zweite DC-Netzwerk (204) mit einer zweiten Spannung arbeitet, die größer als die erste Spannung ist; und
die erste elektrische Maschine (111) und die zweite elektrische Maschine (113) als ein Motorgeneratorsatz zum Transferieren von elektrischem Strom zu dem ersten DC-Netzwerk (203) von dem zweiten DC-Netzwerk (204) über die Welle funktionsfähig sind.

2. Gasturbinentriebwerk (101) nach Anspruch 1, wobei die erste elektrische Maschine (111) eine niedrigere Antriebsleistung als die zweite elektrische Maschine (113) hat.

3. Gasturbinentriebwerk (101) nach Anspruch 1 oder Anspruch 2, wobei:
der erste Stromwandler (201) ein unidirektionaler Gleichrichter ist;
der zweite Stromwandler (202) ein unidirektionaler Wechselrichter ist.

4. Gasturbinentriebwerk (101) ach Anspruch 1 oder Anspruch 2, wobei der erste Stromwandler (201) und der zweite Stromwandler (202) bidirektionale Wandler sind, wodurch die erste elektrische Maschine (111) und die zweite elektrische Maschine (113) als ein Motorgeneratorsatz zum Transferieren von elektrischem Strom zwischen dem ersten DC-Netzwerk (203) und dem zweiten DC-Netzwerk (204) funktionsfähig sind.

5. Gasturbinentriebwerk (101) nach einem der vorhergehenden Ansprüche, wobei die Welle eine Niederdruckwelle ist, und das Gasturbinentriebwerk ferner eine Hochdruckwelle aufweist.

6. Gasturbinentriebwerk (101) nach Anspruch 5, das ferner eine dritte rotierende elektrische Maschine (114) aufweist, die mechanisch mit der Hochdruckwelle verbunden ist und einen damit verbundenen dritten Stromwandler (206) hat, um die dritte elektrische Maschine (114) mit dem ersten DC-Netzwerk (203) zu koppeln.

7. Gasturbinentriebwerk (101) nach Anspruch 6, wobei der dritte Stromwandler (206) ein unidirektionaler Wechselrichter ist.

8. Gasturbinentriebwerk (101) nach Anspruch 6, wobei der dritte Stromwandler (206) ein bidirektionaler Wandler ist.

9. Gasturbinentriebwerk nach einem der vorhergehenden Ansprüche, wobei die elektrischen Maschinen (111, 113, 114) Permanentmagnetläufer aufweisen.

10. Gasturbinentriebwerk (101) nach einem der vorhergehenden Ansprüche, wobei die erste elektrische Maschine (111) und die zweite elektrische Maschine (113) als ein Dynamotor konfiguriert sind.

11. Gasturbinentriebwerk nach einem der vorhergehenden Ansprüche, wobei das erste DC-Netzwerk (203) eine elektronische Triebwerksteuerung (118) umfasst.

12. Gasturbinentriebwerk nach einem der vorhergehenden Ansprüche, wobei das erste DC-Netzwerk (203) einen oder mehrere elektrische Hilfsantriebe umfasst, die mit jeweiligen Triebwerkzubehörelementen (205) verbunden sind.

13. Gasturbinentriebwerk (101) nach Anspruch 12, wobei die Triebwerkzubehörelemente (205) ein oder mehrere Triebwerkzubehörelemente sind, die ausgewählt sind aus:
einer Kraftstoffpumpe;
einer Ölpumpe;
einer Hydraulikpumpe;
einem Innenraumgebläse.

14. Gasturbinentriebwerk (101) nach einem der vorhergehenden Ansprüche, wobei das zweite DC-Netzwerk (204) eine Energiespeichereinheit umfasst, wodurch der Motorgeneratorsatz funktionsfähig ist, Strom aus der Energiespeichereinheit an das erste DC-Netzwerk (203) zu liefern.

15. Verfahren, das ein Transferieren von elektrischem Strom an ein erstes DC-Netzwerk (203), das mit einer ersten Spannung arbeitet, von einem zweiten D-Netzwerk (204) aufweist, das mit einer zweiten Spannung arbeitet, die größer als die erste Spannung ist, wobei das Verfahren ferner aufweist:
Bereitstellen eines Gasturbinentriebwerks (101) nach einem der Ansprüche 1 bis 14;
Bereitstellen von elektrischen Strom mit der zweiten Spannung für den zweiten Stromwandler (202) von dem zweiten DC-Netzwerk (204);
Veranlassen einer Rotation der zweiten elektrischen Maschine (113) durch den zweiten Stromwandler (202) und dadurch der ersten elektrischen Maschine (111);
Generieren von elektrischem Strom durch die erste elektrische Maschine (111);
Bereitstellen von elektrischem Strom für das erste DC-Netzwerk (203) mit der ersten Spannung durch den ersten Stromwandler (201).

## Revendications

1. Moteur à turbine à gaz (101) ayant un corps, comprenant en outre :
une première machine électrique rotative (111) couplée mécaniquement au corps et à laquelle est connecté un premier convertisseur de puissance (201) pour interfacer la machine électrique avec un premier réseau CC (203) fonctionnant à une première tension ;
une deuxième machine électrique rotative (113) à laquelle est connecté un deuxième convertisseur de puissance (202) pour interfacer la machine électrique avec un second réseau CC (204) ;
**caractérisé en ce que** :
la deuxième machine électrique (113) est couplée mécaniquement au même corps que la première machine électrique ;
le second réseau CC (204) fonctionne à une seconde tension supérieure à ladite première tension ;
et
la première machine électrique (111) et la deuxième machine électrique (113) peuvent fonctionner comme un groupe moteur-générateur pour le transfert d'énergie électrique vers le premier réseau CC (203) à partir du second réseau CC (204) via le corps.

2. Moteur à turbine à gaz (101) selon la revendication 1, dans lequel la première machine électrique (111) a une puissance nominale inférieure à celle de la deuxième machine électrique (113).

3. Moteur à turbine à gaz (101) selon la revendication 1 ou la revendication 2, dans lequel :
le premier convertisseur de puissance (201) est un redresseur unidirectionnel ;
le deuxième convertisseur de puissance (202) est un onduleur unidirectionnel.

4. Moteur à turbine à gaz (101) selon la revendication 1 ou la revendication 2, dans lequel le premier convertisseur de puissance (201) et le deuxième convertisseur de puissance (202) sont des convertisseurs bidirectionnels, grâce à quoi la première machine électrique (111) et la deuxième machine électrique (113) peuvent fonctionner comme un groupe moteur-générateur pour le transfert d'énergie électrique entre le premier réseau CC (203) et le second réseau CC (204).

5. Moteur à turbine à gaz (101) selon l'une quelconque des revendications précédentes, dans lequel le corps est un corps basse pression, et le moteur à turbine à gaz comprend en outre un corps haute pression.

6. Moteur à turbine à gaz (101) selon la revendication 5, comprenant en outre une troisième machine électrique rotative (114) couplée mécaniquement au corps haute pression et à laquelle est connecté un troisième convertisseur de puissance (206) pour interfacer la troisième machine électrique (114) avec le premier réseau CC (203).

7. Moteur à turbine à gaz (101) selon la revendication 6, dans lequel le troisième convertisseur de puissance (206) est un onduleur unidirectionnel.

8. Moteur à turbine à gaz (101) selon la revendication 6, dans lequel le troisième convertisseur de puissance (206) est un convertisseur bidirectionnel.

9. Moteur à turbine à gaz selon l'une quelconque des revendications précédentes, dans lequel les machines électriques (111, 113, 114) comprennent des rotors à aimants permanents.

10. Moteur à turbine à gaz (101) selon l'une quelconque des revendications précédentes, dans lequel la première machine électrique (111) et la deuxième machine électrique (113) sont configurées comme un dynamoteur.

11. Moteur à turbine à gaz (101) selon l'une quelconque des revendications précédentes, dans lequel le premier réseau CC (203) comprend un contrôleur électronique de moteur (118).

12. Moteur à turbine à gaz (101) selon l'une quelconque des revendications précédentes, dans lequel le premier réseau CC (203) comprend un ou plusieurs entraînements d'accessoires électriques connectés à des accessoires de moteur respectifs (205).

13. Moteur à turbine à gaz (101) selon la revendication 12, dans lequel les accessoires de moteur (205) sont un ou plusieurs accessoires de moteur choisis parmi :
une pompe à carburant ;
une pompe à huile ;
une pompe hydraulique ;
un ventilateur de cabine.

14. Moteur à turbine à gaz (101) selon l'une quelconque des revendications précédentes, dans lequel le second réseau CC (204) comprend un dispositif de stockage d'énergie, grâce auquel le groupe moteur-générateur peut fonctionner pour fournir de l'énergie au premier réseau CC (203) à partir du dispositif de stockage d'énergie.

15. Procédé comprenant le transfert d'énergie électrique vers un premier réseau CC (203) fonctionnant à une première tension à partir d'un second réseau CC (204) fonctionnant à une seconde tension supérieure à la première tension, le procédé comprenant en outre :
la fourniture d'un moteur à turbine à gaz (101) selon l'une quelconque des revendications 1 à 14 ;
la fourniture d'énergie électrique à la seconde tension au deuxième convertisseur de puissance (202) à partir du second réseau CC (204) ;
l'entraînement de la rotation de la deuxième machine électrique (113) par le deuxième convertisseur de puissance (202) et ainsi de la première machine électrique (111) ;
la génération d'énergie électrique par la première machine électrique (111) ;
la fourniture d'énergie électrique au premier réseau CC (203) à la première tension par le premier convertisseur de puissance (201).
